(19)

Europäisches
Patentamt
European
Patent Office
Office européen
des brevets

(11) **EP 1 997 776 B1**

(12) **EUROPÄISCHE PATENTSCHRIFT**

(45) Veröffentlichungstag und Bekanntmachung des Hinweises auf die Patenterteilung:
**02.02.2011 Patentblatt 2011/05**

(51) Int Cl.:
**C01B 33/14** *(2006.01)*     **C01B 33/18** *(2006.01)*

(21) Anmeldenummer: **07108557.5**

(22) Anmeldetag: **21.05.2007**

(54) **Pyrogen hergestelltes Siliciumdioxid mit niedriger Verdickungswirkung**

Pyrogenetically produced silicon dioxide with low thickening effect

Dioxyde de silicium pyrogène à action d'épaississement moindre

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**03.12.2008 Patentblatt 2008/49**

(73) Patentinhaber: **Evonik Degussa GmbH**
**45128 Essen (DE)**

(72) Erfinder:
• **Hille, Andreas**
**79541 Lörrach (DE)**

• **Kneisel, Florian Felix**
**60599 Frankfurt (DE)**
• **Hamm, Volker**
**79713 Bad Säckingen (DE)**
• **Rochnia, Matthias**
**63683 Ortenberg-Bleichenbach (DE)**

(56) Entgegenhaltungen:
**EP-A- 1 004 545      WO-A-2004/054929**
**DE-A1- 19 756 840**

**Beschreibung**

Die Erfindung betrifft pyrogen hergestelltes Siliciumdioxidpulver mit niedriger Verdickungswirkung, dessen Herstellung und Verwendung.

In DE-A-10145162 wird ein hydrophiles, pyrogenes Siliciumdioxid in Form aggregierter Primärpartikel mit einer mittleren Partikelgrösse von kleiner als 100 nm offenbart, welches vorzugsweise eine spezifische Oberfläche von 25 bis 500 $m^2$/g (gemessen nach der BET Methode nach DIN 66131 und 66132) mit einer minimalen Oberflächenrauhigkeit, aufweist. Das pyrogene Siliciumdioxid weist weiterhin vorzugsweise eine fraktale Dimension der Oberfläche von kleiner oder gleich 2,3 auf, beziehungsweise eine fraktale Dimension der Masse von kleiner oder gleich als 2,8.

In DE-A-102004063762 wird ein hydrophiles, pyrogenes Siliciumdioxid in Form aggregierter Primärpartikel mit einer mittleren Partikelgrösse von 0,5 - 1000 nm offenbart, welches vorzugsweise eine spezifische Oberfläche von 1 bis 1000 $m^2$/g (gemessen nach der BET Methode nach DIN 66131 und 66132) aufweist. Das pyrogene Siliciumdioxid weist weiterhin vorzugsweise eine fraktale Dimension der Oberfläche von kleiner oder gleich 2,3 auf, beziehungsweise eine fraktale Dimension der Masse von kleiner oder gleich als 2,8.

In DE-A-102005007753 wird ein hydrophiles, pyrogenes Siliciumdioxid in Form aggregierter Primärpartikel mit einer mittleren Partikelgrösse von 0,5 - 1000 nm offenbart, welches vorzugsweise eine spezifische Oberfläche von mehr als 10 $m^2$/g, bevorzugt 75 bis 350 $m^2$/g (gemessen nach der BET Methode nach DIN 66131 und 66132) aufweist. Das pyrogene Siliciumdioxid weist weiterhin vorzugsweise eine fraktale Dimension der Oberfläche von kleiner oder gleich 2,3 auf, beziehungsweise eine fraktale Dimension der Masse von kleiner oder gleich als 2,8.

Dieses Siliciumdioxid und damit auch das in DE-A-10145162 und DE-A-102004063762 offenbarte, soll gegenüber dem Stand der Technik eine erhöhte Verdickungswirkung zeigen.

Als Flüssigkeiten zur Bestimmung der Verdickungswirkung können oligomere oder polymere Harze in organischen Lösemitteln verwendet werden.

Die Oberflächenrauhigkeit kann mittels der Theorie der Fraktale quantifiziert werden. Fraktale sind Strukturen, die sich auf verschiedenen Längenskalen ähneln. Viele Eigenschaften von Fraktalen sind mit Potenzgesetzen beschreibbar. Untersucht man beispielsweise die Zunahme der Masse m mit dem Radius r, so ergibt sich für den Grenzfall einer kompakten Kugel die massenfraktale Dimension $d_m$ = 3. Für eine Struktur, welche Hohlräume und Poren besitzt, resultiert eine massenfraktale Dimension $d_m$ < 3.

Auch Oberflächen können fraktale Eigenschaften besitzen. Hier skaliert die Größe der Oberfläche mit dem Radius. Für eine perfekt glatte Oberfläche ergibt sich 5.

Für pyrogene Kieselsäuren liegt die massenfraktale Dimension in der Regel im Bereich von 1,5 bis 2,0 und die oberflächenbezogenen Dimensionen bei ca. 2,0.

In DE-A-19756840 wird ein pyrogenes Siliciumdioxid offenbart, welches eine BET-Oberfläche zwischen 30 und 150 $m^2$/g und eine fraktale BET-Dimension bestimmt durch N2-Adsorption im Druckbereich p/p0 = 0,5 bis 0,8 nach der fraktalen BET-Theorie für die Mehrlagenadsorption nach dem von Pfeifer, Obert und Cole angegebenen Verfahren (Proc. R. Soc. London, A 423, 169 (1989)) von kleiner als 2,605 aufweist. Das so erhaltene Siliciumdioxid kann beispielsweise zum Polieren eingesetzt werden, wobei gegenüber einem Siliciumdioxid nach dem Stand der Technik, eine höhere Abtragsrate aufgrund einer erhöhten Oberflächenrauhigkeit beobachtet wird.

Dieses Siliciumdioxid wird erhalten, indem man in einem Flammenhydrolyseverfahren ein Wasserstoffverhältnis gamma von kleiner 1 und gleichzeitig ein Sauerstoffverhältnis lambda ebenfalls kleiner 1 einhält. Dabei ist gamma das Verhältnis von eingespeistem Wasserstoff zuzüglich Wasserstoff aus den Rohstoffen zu stöchiometrisch benötigtem Wasserstoff. Lambda ist das Verhältnis von eingespeistem Sauerstoff zu stöchiometrisch benötigtem Sauerstoff.

Die Aufgabe der vorliegenden Erfindung bestand darin Partikel mit niedriger Verdickungswirkung bereitzustellen.

Eine weitere Aufgabe der Erfindung bestand darin ein Verfahren zur Herstellung dieses Partikel bereitzustellen.

Gegenstand der Erfindung ist ein pyrogen hergestelltes Siliciumdioxidpulver in Form von aggregierten Primärpartikeln mit

- einer STSA-Oberfläche von 10 bis 500 $m^2$/g,
  wobei die STSA-Oberfläche nach dem t-Verfahren gemäß DIN 66135-2, ASTM D 5816 unter Verwendung der Schichtdickengleichung

$$t = (26{,}6818/(0{,}0124806 - \log(p/p_0)))^{0{,}4}$$

mit p = Gasdruck und $p_0$ = Sättigungsdampfdruck des Adsorptivs bei der Messtemperatur, beide mit der Einheit Pa, bestimmt wird

- einer auf die STSA-Oberfläche bezogenen Verdickungswirkung von 4 bis 8 mPas·g/m$^2$
wobei als Verdickungswirkung der Viskositätswert in mPas einer Dispersion bei 25°C, gemessen mit einem Rotationsviskosimeter bei einer Scherrate von 2,7 s$^{-1}$, bezeichnet, wobei die Dispersion erhalten wird indem man bei einer Temperatur von 22°C zu 7,5 g Siliciumdioxidpulver 142,5 g eines ungesättigten Polyesterharzes, welches bei einer Temperatur von 22°C eine Viskosität von 1300 +/- 100 mPas aufweist, einbringt und mittels eines Dissolvers bei 3000 min$^{-1}$ dispergiert, 60 g dieser Dispersion mit weiteren 90 g des ungesättigten Polyesterharzes versetzt und den Dispergiervorgang wiederholt und

- einem Mikroporenvolumen von 0,03 bis 0,07 cm$^3$/g.

Unter Primärpartikel werden im Sinne der Erfindung Partikel verstanden, die zunächst in der Reaktion gebildet, und im weiteren Reaktionsverlauf zu Aggregaten zusammenwachsen können.

Unter Aggregat im Sinne der Erfindung sind miteinander verwachsene Primärpartikel ähnlicher Struktur und Größe zu verstehen, deren Oberfläche kleiner ist, als die Summe der einzelnen, isolierten Primärpartikel. Mehrere Aggregate oder auch einzelne Primärpartikel können sich weiter zu Agglomeraten zusammenfinden. Aggregate oder Primärpartikel liegen dabei punktförmig aneinander. Agglomerate können jeweils in Abhängigkeit von ihrem Verwachsungsgrad durch Energieeintrag wieder zerlegt werden.

Unter der STSA-Oberfläche (statistical thickness surface area) ist die externe Oberfläche der dem Siliciumdioxidpulver zugrunde liegenden Partikel, d.h. ohne Berücksichtigung der durch Mikroporen hervorgerufenen Oberfläche, zu verstehen. Die Bestimmung der STSA-Oberfläche erfolgt nach dem t-Verfahren (DIN 66135-2, ASTM D 5816) unter Verwendung der Schichtdickengleichung

$$t = (26{,}6818/(0{,}0124806 - \log(p/p_0)))^{0,4}$$

mit p = Gasdruck und p0 = Sättigungsdampfdruck des Adsorptivs bei der Messtemperatur, beide mit der Einheit Pa.

Wegen der mikroporösen Struktur der Siliciumdioxidpartikel ist eine Bestimmung der Oberfläche mittels der BET-Methode (DIN 66131) ist zur Charakterisierung nicht geeignet. Die BET-Oberfläche liegt in der Regel 20 bis 150% über der STSA-Oberfläche.

Die Verdickungswirkung (in mPas) wird bestimmt in einer Dispersion des Siliciumdioxidpulvers in einem ungesättigten Polyesterharz, wie Cokondensate aus ortho- oder meta-Phthalsäure und Malein- oder Fumarsäure, oder deren Anhydride, und einem niedermolekularen Diol, wie zum Beispiel Ethylenglykol, 1,2- oder 1,3-Propandiol, 1,2-, oder 1,3- oder 1,4-Butandiol oder neo-Pentylglykol ($(CH_3)_2C(CH_2OH)_2$), oder Polyole, wie Pentaerythrit, bevorzugt gelöst zu 30 bis 80 Gew.%, bevorzugt 60 bis 70 Gew.%, in einem olefinischen Reaktivverdünner als Lösemittel, wie zum Beispiel Monostyrol. Die Viskosität des Polyesterharzes beträgt 1300 +/- 100 mPas bei einer Temperatur von 22°C. 7,5 g Siliciumdioxidpulver werden zu 142,5 g Polyesterharzes bei einer Temperatur von 22°C eingebracht und mittels eines Dissolvers bei 3000 min$^{-1}$ dispergiert. 60 g dieser Dispersion werden mit weiteren 90 g.des ungesättigten Polyesterharzes versetzt und der Dispergiervorgang wird wiederholt.

Als Verdickungswirkung wird der Viskositätswert in mPas der Dispersion bei 25°C, gemessen mit einem Rotationsviskosimeter bei einer Scherrate von 2,7 s$^{-1}$, bezeichnet. Geeignet als ungesättigtes Polyesterharz ist beispielsweise Ludopal® P6, BASF.

Die STSA-Oberfläche des erfindungsgemäßen Siliciumdioxidpulvers kann bevorzugt 30 bis 300 m$^2$/g und besonders bevorzugt 50 bis 150 m$^2$/g sein.

Die auf die STSA-Oberfläche bezogene Verdickungswirkung des erfindungsgemäßen Siliciumdioxidpulvers kann bevorzugt 5 bis 7 mPas·g/m$^2$ und besonders bevorzugt 5,5 bis 6,5 mPas·g/m$^2$ sein.

Das Mikroporenvolumen kann bevorzugt 0,035 bis 0,065 cm$^3$/g und besonders bevorzugt 0,04 bis 0,06 cm$^3$/g betragen. Das Mesoporenvolumen (2-50 nm) kann bevorzugt 0,15 bis 0,60 cm$^3$/g und besonders bevorzugt 0,20 bis 0,50 cm$^3$/g betragen.

Die fraktale Dimension $D_m$ des erfindungsgemäßen Siliciumdioxidpulvers kann bevorzugt größer als 2,61 bis 2,85, besonderes bevorzugt 2,63 - 2,78 und ganz besonders bevorzugt 2,67 - 2,74 sein. Bestimmt durch $N_2$-Adsorption im Druckbereich p/p0 = 0,5 bis 0,8 nach der fraktalen BET-Theorie für die Mehrlagenadsorption nach dem von Pfeifer, Obert und Cole angegebenen Verfahren (Proc. R. Soc. London, A 423, 169 (1989).

Der mittlere Primärpartikeldurchmesser des erfindungsgemäßen Siliciumdioxidpulvers kann bevorzugt >10 bis <40 nm und besonders bevorzugt 15 bis 38 nm und ganz besonders bevorzugt 20 bis 33 nm sein. Die Bestimmung des mittleren Primärpartikeldurchmessers kann vorzugsweise durch Auszählung aus TEM-Aufnahmen (TEM = Transmissions-Elektronenmikroskop) erfolgen.

Die DBP-Absorption des erfindungsgemäßen Siliciumdioxidpulvers kann bevorzugt kleiner oder gleich 300 g/100 g Dibutlyphthalat sein. Besonders bevorzugt kann eine DBP-Absorption von 200 bis < 300 g/100 g und ganz besonders bevorzugt eine von 250 bis 290 g/100 g sein.

Ein weiterer Gegenstand der Erfindung ist ein Verfahren zur Herstellung des erfindungsgemäßen Siliciumdioxidpulvers, bei dem man

- ein ein oder mehrere hydrolysierbare Siliciumverbindungen enthaltendes Gemisch,
- ein sauerstoffenthaltendes Gas und
- ein Primär-Brenngas, in einer Mischkammer mischt,
- und über ein Rohr in eine Reaktionskammer einleitet und dort unter Bildung einer Flamme zündet,
- zusätzlich ein Sekundär-Brenngas in die Reaktionskammer einleitet und
- nachfolgend das entstandene Pulver von gasförmigen Stoffen abtrennt, wobei
- das Wasserstoffverhältnis $gamma_{Primär}$ kleiner als 1 ist und gleichzeitig das Sauerstoffverhältnis $lambda_{Primär}$ größer als 1.ist, und wobei
- $gamma_{Primär}$, definiert als das der Mischkammer zugeführtes Brenngas dividiert durch das stöchiometrisch benötigte Brenngas und
- $lambda_{Primär}$, definiert als das der Mischkammer zugeführter Sauerstoff dividiert durch den stöchiometrisch benötigten Sauerstoff.

Pyrogen, insbesondere flammenhydrolytisch hergestellte, Siliciumdioxidpulver werden üblicherweise so erhalten, dass die gasförmigen Ausgangsstoffe in einem derartigen stöchiometrischen Verhältnis zueinander stehen, dass das zugeführte Brenngas mindestens ausreicht um die Einsatzstoffe zu hydrolysieren. Die hierfür benötigte Menge an Brenngas wird als stöchiometrische Brenngasmenge bezeichnet.

Das Verhältnis des der Mischkammer zugeführten Primär-Brenngases (in Mol) zu der soeben definierten stöchiometrisch erforderlichen Brenngasmenge (in Mol) wird als $gamma_{Primär}$ bezeichnet. $gamma_{Primär}$ ist im erfindungsgemäßen Verfahren kleiner als 1.

$$gamma_{Primär} = (Primär\text{-}Brenngas/Brenngas\ stöchiometrisch) < 1$$

Bei pyrogen Siliciumdioxidpulvern wird weiterhin üblicherweise eine Sauerstoffmenge.(beispielsweise aus der Luft) eingesetzt, die mindestens ausreicht um die Siliciumausgangsverbindung in Siliciumdioxid zu überführen und eventuell noch vorhandenes überschüssiges Brenngas umzusetzen. Diese Sauerstoffmenge wird als stöchiometrische Sauerstoffmenge bezeichnet.

Das Verhältnis des der Mischkammer in Form eines sauerstoffenthaltendeden Gases zugeführter Sauerstoff (in Mol) zu der soeben definierten stöchiometrisch erforderlichen Sauerstoffmenge (in Mol) wird als $lambda_{Primär}$ bezeichnet. $Lambda_{Primär}$ ist im erfindungsgemäßen Verfahren größer als 1.

$$lambda_{Primär} = (Primär\text{-}Sauerstoff/Sauerstoff\ stöchiometr.) > 1$$

Weiterhin wird bei dem erfindungsgemäßen Verfahren ein Sekundär-Brenngas eingesetzt. Dieses liegt jedoch nicht wie das Primär-Brenngas bereits in der Mischkammer vor, sondern wird zu einem späteren Zeitpunkt der Reaktion in die Reaktionskammer eingebracht.

Das Verhältnis der insgesamt eingebrachten BrenngasMenge(in Mol), Primär- und Sekundär-Brenngas, zu der stöchiometrisch erforderlichen Brenngasmenge (in Mol) wird als $gamma_{Gesamt}$ bezeichnet. $gamma_{Gesamt}$ ist im erfindungsgemäßen Verfahren größer oder gleich 1.

$$gamma_{Gesamt} = (Gesamt\text{-}Brenngas/Brenngas\ stöchiometrisch) \geq 1$$

Zusätzlich kann bei dem erfindungsgemäßen Verfahren ein weiteres sauerstoffenthaltendes Gas zugeführt werden, und zwar an ein oder mehreren Stellen innerhalb der Reaktionskammer. Dieses sauerstoffenthaltende Gas ist in der Regel Luft, die in Ergänzung zu der in den Brenner eingebrachten Primärluft, als Sekundärluft bezeichnet wird.

Das Verhältnis des in Form sauerstoffenthaltender Gase zugeführten Sauerstoffes (in Mol), in der Regel Primärluft und Sekundärluft, zur stöchiometrisch erforderlichen Sauerstoffmenge (in Mol) wird als $lambda_{Gesamt}$ bezeichnet.

$$\texttt{lambda}_{\texttt{Gesamt}} = (\texttt{Sauerstoff gesamt/Sauerstoff stöchiometr.}) \geq 1$$

In einer bevorzugten Ausführungsform ist $gamma_{Primär}$ 0,4 bis 0,95. Besonders bevorzugt kann $gamma_{Primär}$ 0,5 bis 0,8 sein.

In einer weiteren bevorzugten Ausführungsform ist $gamma_{Gesamt}$ 1,05 bis 4. Besonders bevorzugt kann $gamma_{Gesamt}$ 1,1 bis 2 sein.

In einer weiteren bevorzugten Ausführungsform ist $lambda_{Primär}$ >1 bis 10. Besonders bevorzugt kann $lambda_{Primär}$ 2 bis 5 sein.

In einer weiteren bevorzugten Ausführungsform ist $lambda_{Gesamt}$ >1 bis 10 ist. Besonders bevorzugt kann $lambda_{Gesamt}$ 1,2 bis 2 sein.

Bei dem erfindungsgemäßen Verfahren werden eine oder mehrere hydrolysierbare Siliciumverbindungen eingesetzt. Dabei sind unter hydrolysierbaren Siliciumverbindungen solche zu verstehen, die durch Reaktion mit Wasser in Siliciumdioxid überführt werden. Die Siliciumverbindungen können dampfförmig oder als Lösung in einem Lösungsmittel mit dem keine Reaktion stattfindet, eingebracht werden. Vorzugsweise werden die Siliciumverbindungen dampfförmig eingebracht.

Vorzugsweise handelt es sich bei den hydrolysierbaren Siliciumverbindungen um Siliciumhalogenide, Siliciumorganohalogenide und/oder Siliciumalkoxide. Besonders bevorzugt können $SiCl_4$, $MeSiCl_3$ $Me_2SiCl_2$, $Me_3SiCl$, $Me_4Si$, $HSiCl_3$, $Me_2HSiCl$, $MeEtSiCl_2$, $Cl_3SiSiMeCl_2$, $Cl_3SiSiMe_2Cl$, $Cl_3SiSiCl_3$, $MeCl_2SiSiMeCl_2$, $Me_2ClSiSiMeCl_2$, $Me_2ClSiSiClMe_2$, $Me_3SiSiClMe_2$, $Me_3SiSiMe_3$, $MeEtSiCl_2$ Tetraethoxysilan, Tetramethoxysilan, D4-Polysiloxan und/oder D5-Polysiloxan eingesetzt werden. Ganz besonders bevorzugt wird $SiCl_4$ eingesetzt.

Als Brenngas kann bevorzugt Wasserstoff, Methan, Ethan, Propan, Butan, Erdgas und/oder Kohlenmonoxid eingesetzt werden. Besonders bevorzugt ist Wasserstoff.

Als sauerstoffenthaltendes Gas wird bevorzugt Luft (Primärluft, Sekundärluft)) eingesetzt. Es ist jedoch auch möglich die Luft mit Sauerstoff, gewöhnlich bis zu einem Sauerstoffanteil von 35 Vol.-%, anzureichern.

Nach der Abtrennung von gasförmigen Stoffen kann das Siliciumdioxidpulver vorzugsweise mit Wasserdampf behandelt werden. Diese Behandlung dient in erster Linie chloridhaltige Gruppen von der Oberfläche zu entfernen. Gleichzeitig reduziert diese Behandlung die Anzahl von Agglomeraten. Das Verfahren kann kontinuierlich so ausgeführt werden, dass das Pulver mit Wasserdampf, gegebenenfalls zusammen mit Luft, im Gleich- oder Gegenstrom behandelt wird. Die Temperatur bei der die Behandlung mit Wasserdampf erfolgt, beträgt zwischen 250 und 750°C, wobei Werte von 450 bis 550°C bevorzugt sind.

Ein weiterer Gegenstand der Erfindung ist eine Dispersion, welche das erfindungsgemäße Siliciumdioxidpulver enthält.

Die wässerige Phase der Dispersion kann wässerig oder organisch sein. Bevorzugt sind wässerige Dispersionen, insbesondere solche, die als flüssige Phase 90 oder mehr Gew.-% Wasser aufweisen.

Die erfindungsgemäße Dispersion kann einen Gehalt an Siliciumdioxidpulver von 0,1 bis 50 Gew.-% aufweisen. Besonders bevorzugt können Dispersionen mit einem Gehalt an Siliciumdioxidpulver von 5 bis 30 Gew.-% sein.

Die erfindungsgemäße Dispersion kann weiterhin einen pH-Wert von 2 bis 11,5 aufweisen. Besonders bevorzugt kann ein alkalischer pH-Wert von 8,5 bis 11,5 sein.

Weiterhin kann der mittlerer Partikeldurchmesser der Siliciumdioxidpartikel in der Dispersion kleiner als 500 nm (Medianwert) sein. Durch geeignete Dispergierverfahren, beispielsweise mittels Hochenergiemühlen, kann ein mittlerer Partikeldurchmesser von 100 bis 400 nm erzielt werden.

Die erfindungsgemäße Dispersion kann durch die Addition von Basen stabilisiert werden. Als Basen können Ammoniak, Ammoniumhydroxid, Tetramethylammoniumhydroxid, primäre, sekundäre oder tertiäre organische Amine, Natronlauge oder Kalilauge eingesetzt werden.

Die erfindungsgemäße Dispersion kann weiterhin durch die Addition von Säuren stabilisiert werden. Als Säuren können anorganische Säuren, organische Säuren oder Mischungen der vorgenannten eingesetzt werden. Als anorganische Säuren können insbesondere Phosphorsäure, Phosphorige Säure, Salpetersäure, Schwefelsäure, Mischungen daraus, und ihre sauer reagierenden Salze Verwendung finden. Als organische Säuren finden bevorzugt Carbonsäuren der allgemeinen Formel $C_nH_{2n+1}CO_2H$, mit n=0-6 oder n= 8, 10, 12, 14, 16, oder Dicarbonsäuren der allgemeinen Formel $HO_2C(CH_2)_nCO_2H$, mit n=0-4, oder Hydroxycarbonsäuren der allgemeinen Formel $R_1R_2C(OH)CO_2H$, mit $R_1$=H, $R_2$=$CH_3$, $CH_2CO_2H$, $CH(OH)CO_2H$, oder Phthalsäure oder Salicylsäure, oder sauer reagierende Salze der vorgenannten Säuren oder Mischungen der vorgenannten Säuren und ihrer Salze.

Weiterhin können die Aminosäuren Alanin, Arginin, Asparagin, Cystein, Glutamin, Glycin, Histidin, Isoleucin, Leucin, Lysin, Methionin, Phenylalanin, Prolin, Serin, Threonin, Tryptophan, Tyrosin und Valin und deren Salze Bestandteil der erfindungsgemäßen Dispersion sein.

Die erfindungsgemäße Dispersion kann weiterhin durch die Addition von kationischen Polymeren oder Aluminiumsalzen oder einem Gemisch aus kationischen Polymeren und Aluminiumsalzen stabilisiert werden. Als kationische Polymere können solche mit mindestens einer quaternären Ammoniumgruppe, Phosphoniumgruppe, einem Säureaddukt einer primären, sekundären oder tertiären Amingruppe, Polyethylenimine, Polydiallylamine oder Polyallylamine, Polyvinylamine, Dicyandiamidkondensate, Dicyandiamid-Polyamin-Cokondensate oder Polyamid-Formaldehyd-Kondensate eingesetzt werden.

Als Aluminiumsalze können Aluminiumchlorid, Aluminiumhydroxychloride der allgemeinen Formel Al(OH)$_x$Cl mit x=2-8, Aluminiumchlorat, Aluminiumsulfat, Aluminiumnitrat, Aluminiumhydroxynitrate der allgemeinen Formel Al(OH)$_x$NO$_3$ mit x=2-8, Aluminiumacetat, Alaune wie Aluminiumkaliumsulfat oder Aluminiumammoniumsulfat, Aluminiumformiate, Aluminiumlactat, Aluminiumoxid, Aluminiumhydroxidacetat, Aluminiumisopropylat, Aluminiumhydroxid, Aluminiumsilikate und Gemische der vorgenannten Verbindungen eingesetzt werden.

Gegebenenfalls kann die Dispersion noch weitere Additive enthalten. Dies können beispielsweise Oxidationsmittel wie Wasserstoffperoxid oder Persäuren, Oxidationsaktivatoren enthalten, deren Zweck es ist die Oxidationsgeschwindigkeit zu erhöhen, Korrosionsinhibitoren wie beispielsweise Benzotriazol sein. Ferner können der erfindungsgemäßen Dispersion oberflächenaktive Stoffe zugesetzt werden, die nichtionischer, kationischer, anionischer oder amphoterer Art sind.

Die erfindungsgemäße Dispersion kann durch die dem Fachmann bekannten Verfahren hergestellt werden. Die Art der Dispergiervorrichtung ist nicht beschränkt. Es kann jedoch vorteilhaft sein, speziell für die Herstellung hochgefüllter Dispersionen, Dispergiervorrichtungen mit einem hohen Energieeintrag zu benutzen. Dies können beispielsweise Rotor-Stator-Systeme, Planetenkneter oder Hochenergiemühlen sein.

Insbesondere ist ein Verfahren vorteilhaft bei dem man

- Wasser, welches durch Zugabe von Säuren auf pH-Werte zwischen 2 und 4 eingestellt ist, aus einer Vorlage über eine Rotor-/Statormaschine im Kreis führt, und
- über eine Einfüllvorrichtung kontinuierlich oder diskontinuierlich und bei laufender Rotor-/Statormaschine eine solche Menge an Siliciumdioxidpulver in die Scherzone zwischen den Schlitzen der Rotorzähne und der Statorschlitze eingebracht, dass eine Vordispersion mit einem Feststoffgehalt zwischen 20 und 40 Ges.-% resultiert, und nachdem alles Siliciumdioxidpulver zugegeben ist, die Einfüllvorrichtung schließt und weiterschert, und
- anschließend durch Verdünnen die Vordispersion unter Beibehalten der Dispergierbedingungen auf den gewünschten Feststoffgehalt und pH-Wert der Dispersion einstellt.

Die Scherrate liegt dabei vorzugsweise im Bereich zwischen 10000 und 40000 s$^{-1}$.

Weiterhin können Hochenergiemühlen eingesetzt werden. Dabei werden zwei unter hohem Druck stehende vordispergierte Suspensionsströme über eine Düse entspannt. Beide Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche.

Ein weiterer Gegenstand der Erfindung ist die Verwendung des erfindungsgemäßen Siliciumdioxidpulvers oder der erfindungsgemäßen Dispersion zur Herstellung von Polyesterfolien, von Katalysatorträgern, als Bestandteil von Lacken und Farben und zum Polieren. Insbesondere ist das erfindungsgemäße Siliciumdioxidpulver oder die erfindungsgemäße Dispersion zum chemisch-mechanischen Polieren (CMP) von metallischen und oxidischen Oberflächen geeignet.

**Beispiele**

Analytik:

Die Dibutylphthalatabsorption wird gemessen mit einem Gerät RHEOCORD 90 der Fa. Haake, Karlsruhe. Hierzu werden 8 g des Siliciumdioxidpulvers auf 0,001 g genau in eine Knetkammer eingefüllt, diese mit einem Deckel verschlossen und Dibutylphthalat über ein Loch im Deckel mit einer vorgegebenen Dosierrate von 0,0667 ml/s eindosiert. Der Kneter wird mit einer Motordrehzahl von 125 Umdrehungen pro Minute betrieben. Nach Erreichen des Drehmomentmaximums wird der Kneter und die DBP-Dosierung automatisch abgeschaltet. Aus der verbrauchten Menge DBP und der eingewogenen Menge der Partikel wird die DBP-Absorption berechnet nach:

```
DBP-Zahl (g/100 g) = (Verbrauch DBP in g / Einwaage
Partikel in g) x 100.
```

Beispiel 1:

108 kg/h Siliciumtetrachlorid, 14 Nm3/h Wasserstoff. (Primär-Brenngas) und 140 Nm3/Luft werden in einem Brenner gemischt, das Gemisch gezündet und in eine Reaktionskammer hinein verbrannt. In die Reaktionskammer werden zusätzlich 21 Nm3/h Wasserstoff (Sekundär-Brenngas) und 40 Nm3/h Sekundärluft eingebracht.

Hieraus berechnet sich $gamma_{Primär}$ zu 0,50, $gamma_{Gesamt}$ zu 1,24, $lambda_{Primär}$ zu 4,13 und $lambda_{Gesamt}$ zu 1,67.

Das entstandene Pulver wird in einem nachgeschalteten Filter abgeschieden und anschließend im Gegenstrom mit Luft und Wasserdampf bei 520°C behandelt.

Man erhält ein Siliciumdioxidpulver mit den in Tabelle 2 angegebenen Eigenschaften.

Die Beispiele 2 bis 11 werden analog Beispiel 1 durchgeführt, jedoch unter Verwendung der in Tabelle 1 angegebenen Einsatzstoffmengen.

Die Eigenschaften der aus den Beispielen 2 bis 11 erhaltenen Pulver sind in Tabelle 2 wiedergegeben.

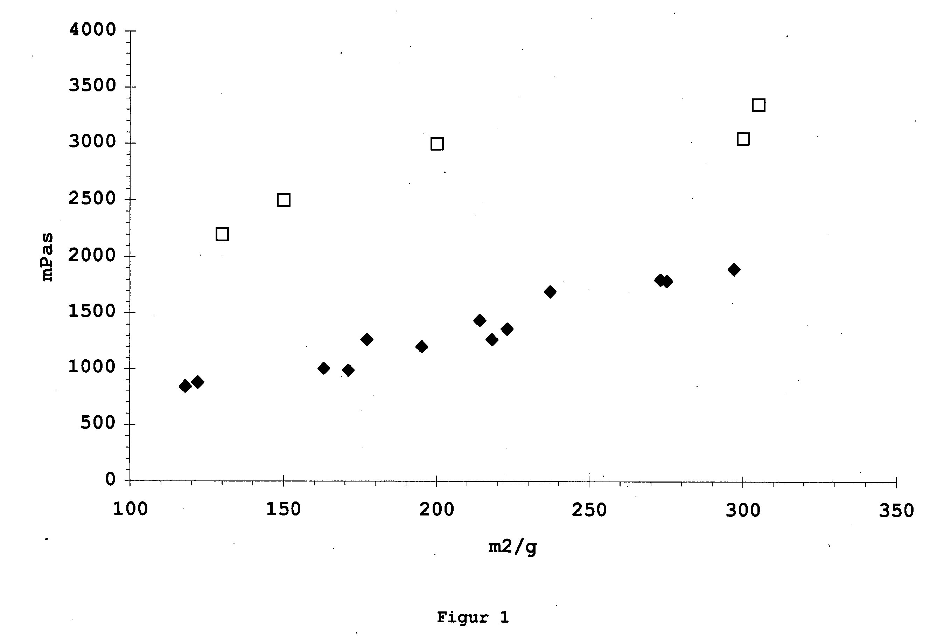

Figur 1 zeigt die Verdickung in (mPas) in Abhängigkeit von der STSA-Oberfläche (in $m^2/g$). Die Verdickung wird wie vorne beschrieben unter Verwendung von Ludopal P6, bestimmt. Dabei sind die erfindungsgemäßen Siliciumdioxidpulver aus den Beispielen 1 bis 11, gekennzeichnet mit ♦, kommerziell erhältlichen Pulvern, gekennzeichnet mit □, gegenübergestellt. Bei diesen handelt es sich um Aerosil® 130, Aerosil®150, Aerosil®200, Aerosil® 300 und Aerosil® 380, alle Degussa. In Figur 1 sind diese in der angegebenen Reihenfolge von kleineren zu größeren STSA-Oberflächen, angegeben.

Figur 1 zeigt die deutlich geringere Verdickung der erfindungsgemäßen Siliciumdioxidpulver gegenüber dem Stand der Technik.

Beispiel 12: Herstellung einer erfindungsgemäßen Dispersion Es werden 37,14 kg VE-Wasser vorgelegt und 20 kg Pulver aus Beispiel 1 mittels einer Conti-TDS 3 innerhalb von 10 Minuten eingesaugt und nachfolgend 15 Minuten geschert. Anschließend werden 21 kg VE-Wasser und 4,3 kg 30 gewichtsprozentige Kalilauge hinzugegeben. Es resultiert eine Dispersion mit einem Anteil an Siliciumdioxid von 25 Gew.-% und einem pH-Wert von 10,5. Der mittlere Partikeldurchmesser (Medianwert) ist 0,4 $\mu$m.

**Tabelle 1: Einsatzstoffe und Einsatzmengen**

| Beispiel | SiCl$_4$ | Wasserstoff | | Luft | | gamma | | lambda | |
|---|---|---|---|---|---|---|---|---|---|
| | | Primär | Sekundär | Primär | Sekundär | Primär | Gesamt | Primär | Gesamt |
| | kg/h | Nm$^3$/h | Nm$^3$/h | Nm$^3$/h | Nm$^3$/h | | | | |
| 1 | 108 | 14 | 21 | 140 | 40 | 0,50 | 1,24 | 4,13 | 1,67 |
| 2 | 108 | 14 | 21 | 120 | 40 | 0,50 | 1,24 | 3,54 | 1,43 |
| 3 | 108 | 17 | 21 | 140 | 40 | 0,60 | 1,35 | 3,40 | 1,54 |
| 4 | 108 | 14 | 21 | 85 | 40 | 0,50 | 1,24 | 4,18 | 1,69 |
| 5 | 108 | 20 | 21 | 140 | 40 | 0,71 | 1,45 | 2,90 | 1,43 |
| 6 | 108 | 14 | 21 | 100 | 40 | 0,50 | 1,24 | 2,95 | 1,20 |
| 7 | 108 | 17 | 21 | 120 | 40 | 0,60 | 1,35 | 2,92 | 1,32 |
| 8 | 108 | 14 | 21 | 100 | 40 | 0,50 | 1,24 | 2,95 | 1,20 |
| 9 | 108 | 22 | | 21 140 | 40 | 0,78 | 1,53 | 2,64 | 1,36 |
| 10 | 108 | 17 | 21 | 100 | 40 | 0,60 | 1,35 | 2,44 | 1,10 |
| 11 | 108 | 20 | 21 | 120 | 40 | 0,71 | 1,45 | 2,49 | 1,22 |

**Tabelle 2: Physikalisch-chemische Eigenschaften der Siliciumdioxidpulver**

| Beispiel | Oberfläche | | Verdickung | Verdeckung/ STSA | Porenvolumen | | | $D_m$ | ø Primärpartikel | DBP |
| --- | --- | --- | --- | --- | --- | --- | --- | --- | --- | --- |
| | STSA | BET | | | Mikro | Meso | gesamt | | | |
| | $m^2/g$ | $m^2/g$ | mPas | mPas·g/m² | $cm^3/g$ | $cm^3/g$ | $cm^3/g$ | | nm | g/100g |
| 1 | 118 | 269 | 840 | 7,12 | 0,063 | 0,310 | 0,45 | 2,7740 | 22,9 | 256 |
| 2 | 163 | 297 | 999 | 6,13 | 0,060 | 0,280 | 0,57 | 2,7350 | 27,0 | 276 |
| 3 | 171 | 310 | 982 | 5,74 | 0,039 | 0,520 | 0,63 | 2,6430 | 20,1 | 266 |
| 4 | 195 | 327 | 1199 | 6,15 | 0,061 | 0,359 | 0,65 | 2,6870 | 11,1 | 299 |
| 5 | 214 | 363 | 1435 | 6,71 | 0,069 | 0,405 | 0,70 | 2,6890 | 10,8 | 300 |
| 6 | 218 | 337 | 1263 | 5,79 | 0,054 | 0,350 | 0,67 | 2,7030 | 17,0 | 297 |
| 7 | 223 | 351 | 1360 | 6,10 | 0,057 | 0,410 | 0,84 | 2,6940 | 15,6 | 298 |
| 8 | 237 | 353 | 1692 | 7,14 | 0,059 | 0,437 | 0,74 | 2,6710 | 10,0 | 310 |
| 9 | 273 | 355 | 1799 | 6,59 | 0,039 | 0,520 | 1,04 | 2,6430 | 15,2 | 310 |
| 10 | 275 | 356 | 1788 | 6,50 | 0, 038 | 0,510 | 0,92 | 2,6490 | 14,7 | 327 |
| 11 | 297 | 368 | 1895 | 6,38 | 0,033 | 0,560 | 1,08 | 2,6300 | 13,6 | 313 |

**Patentansprüche**

1. Pyrogen hergestelltes Siliciumdioxidpulver in Form von aggregierten Primärpartikeln mit

    - einer STSA-Oberfläche von 10 bis 500 m$^2$/g,
    wobei die STSA-Oberfläche nach dem t-Verfahren gemäß DIN 66135-2, ASTM D 5816 unter Verwendung der Schichtdickengleichung

$$t = (26,6818/(0,0124806-log(p/p_0)))^{0,4}$$

    mit p = Gasdruck und $p_0$ = Sättigungsdampfdruck des Adsorptivs bei der Messtemperatur, beide mit der Einheit Pa, bestimmt wird
    - einer auf die STSA-Oberfläche bezogenen Verdickungswirkung von 4 bis 8 mPas·g/m$^2$,
    wobei als Verdickungswirkung der Viskositätswert in mPas einer Dispersion bei 25°C, gemessen mit einem Rotationsviskosimeter bei einer Scherrate von 2,7 s$^{-1}$, bezeichnet, wobei die Dispersion erhalten wird indem man bei einer Temperatur von 22°C zu 7,5 g Siliciumdioxidpulver 142,5 g eines ungesättigten Polyesterharzes, welches bei einer Temperatur von_ 22°C eine Viskosität von 1300 +/- 100 mPas aufweist, einbringt und mittels eines Dissolvers bei 3000 min$^{-1}$ dispergiert, 60 g dieser Dispersion mit weiteren 90 g des ungesättigten Polyesterharzes versetzt und den Dispergiervorgang wiederholt und
    - einem Mikroporenvolumen von 0,03 bis 0,07 cm$^3$/g.

2. Pyrogen hergestelltes Siliciumdioxidpulver nach Anspruch 1, **dadurch gekennzeichnet, dass** die STSA-Oberfläche 30 bis 300 m$^2$/g ist.

3. Pyrogen hergestelltes Siliciumdioxidpulver nach den Ansprüchen 1 oder 2, **dadurch gekennzeichnet, dass** die die STSA-Oberfläche bezogenen Verdickungswirkung von 5 bis 7 mPas·g/m$^2$ ist.

4. Pyrogen hergestelltes Siliciumdioxidpulver nach den Ansprüchen 1 bis 3, **dadurch gekennzeichnet, dass** das Mikroporenvolumen 0,035 bis 0,065 cm$^3$/g ist.

5. Pyrogen hergestelltes Siliciumdioxidpulver nach den Ansprüchen 1 bis 4, **dadurch gekennzeichnet, dass** die fraktale Dimension $D_m$ größer 2,61 bis 2,85 ist.

6. Pyrogen hergestelltes Siliciumdioxidpulver nach den Ansprüchen 1 bis 5, **dadurch gekennzeichnet, dass** der mittlere Primärpartikeldurchmesser >10 bis <40 nm ist.

7. Pyrogen hergestelltes Siliciumdioxidpulver nach den Ansprüchen 1 bis 6, **dadurch gekennzeichnet, dass** die DBP-Absorption kleiner oder gleich als 300 g/100 g Dibutlyphthalat ist.

8. Verfahren zur Herstellung des pyrogenen Siliciumdioxidpulvers gemäß der Ansprüche 1 bis 7, **dadurch gekennzeichnet, dass** man

    - ein oder mehrere hydrolysierbare Siliciumverbindungen,
    - ein sauerstoffenthaltendes Gas und
    - ein Primär-Brenngas enthält,

    mischt,

    - in einem Brenner zündet und über ein Rohr in eine Reaktionskammer hinein verbrennt,
    - zusätzlich ein Sekundär-Brenngas in die Reaktionskammer einleitet und
    - nachfolgend das entstandene Pulver von gasförmigen Stoffen abtrennt, wobei
    - das Wasserstoffverhältnis gamma$_{Primär}$ des Rohstoffgemisches kleiner als 1 ist und gleichzeitig das Sauerstoffverhältnis lambda$_{Primär}$ des Rohstoffgemisches größer als 1 ist, und wobei
    - gamma$_{Primär}$, definiert als das der Mischkammer zugeführtes Brenngas dividiert durch das stöchiometrisch benötigte Brenngas und
    - lambda$_{Primär}$, definiert als das der Mischkammer zugeführter Sauerstoff dividiert durch den stöchiometrisch benötigten Sauerstoff.

**9.** Verfahren nach Anspruch 8, **dadurch gekennzeichnet, dass** $gamma_{Primär}$ 0,4 bis 0,9 ist.

**10.** Verfahren nach den Ansprüchen 8 oder 9, **dadurch gekennzeichnet, dass** $gamma_{Gesamt}$ 1,05 bis 4 ist.

**11.** Verfahren nach den Ansprüchen 8 bis 10, **dadurch gekennzeichnet, dass** $lambda_{Primär}$ >1 bis 10 ist.

**12.** Verfahren nach den Ansprüchen 8 bis 11, **dadurch gekennzeichnet, dass** $lambda_{Gesamt}$ >1 bis 10 ist.

**13.** Verfahren nach den Ansprüchen 8 bis 12, **dadurch gekennzeichnet, dass** die hydrolysierbare Siliciumverbindung als Dampf eingebracht wird.

**14.** Verfahren nach den Ansprüchen 8 bis 13, **dadurch gekennzeichnet, dass** als Siliciumverbindung Siliciumhalogenide, Siliciumorganohalogenide und/oder Siliciumalkoxide eingesetzt werden.

**15.** Verfahren nach den Ansprüchen 8 bis 14, **dadurch gekennzeichnet, dass** als Brenngas Wasserstoff, Methan, Ethan, Propan, Butan, Erdgas und/oder Kohlenmonoxid eingesetzt wird.

**16.** Verfahren nach den Ansprüchen 8 bis 15, **dadurch gekennzeichnet, dass** als sauerstoffenthaltendes Gas Luft oder mit Sauerstoff angereicherte Luft eingesetzt wird.

**17.** Dispersion enthaltend das pyrogen hergestellte Siliciumdioxidpulver nach den Ansprüchen 1 bis 7.

**18.** Dispersion nach Anspruch 17, **dadurch gekennzeichnet, dass** der Siliciumdioxidanteil 0,1 bis 50 Gew.-% beträgt.

**19.** Dispersion nach den Ansprüchen 17 oder 18, **dadurch gekennzeichnet, dass** der pH-Wert der Dispersion 2 bis 11,5 beträgt.

**20.** Dispersion nach den Ansprüchen 17 bis 19, **dadurch gekennzeichnet, dass** der mittlerer Partikeldurchmesser der Siliciumdioxidpartikel in der Dispersion kleiner als 500 nm sind.

**21.** Verwendung des pyrogenen Siliciumdioxidpulvers gemäß der Ansprüche 1 bis 7 zur Herstellung von Polyesterfolien, von Katalysatorträgern, als Bestandteil von Lacken und Farben und zum Polieren von metallischen und oxidischen Oberflächen.

**22.** Verwendung der Dispersion gemäß des Anspruches 17 bis 20 zur Herstellung von Polyesterfolien, von Katalysatorträgern, als Bestandteil von Lacken und Farben und zum Polieren von metallischen und oxidischen Oberflächen.

**Claims**

**1.** Pyrogenically prepared silicon dioxide powder in the form of aggregated primary particles having

- an STSA surface area of 10 to 500 $m^2/g$, the STSA surface area being determined by the t method in accordance with DIN 66135-2, ASTM D 5816 using the layer thickness equation

$$t = (26.6818/(0.0124806-\log(p/p_0)))^{0.4}$$

where p = gas pressure and $p_0$ = saturation vapour pressure of the adsorptive at the measurement temperature, both with the unit Pa
- a thickening action, based on the STSA surface area, of 4 to 8 mPas·g/m², thickening action denoting the viscosity value in mPas of a dispersion at 25°C, measured with a rotational viscometer at a shear rate of 2.7 $s^{-1}$, the dispersion being obtained by introducing 142.5 g of an unsaturated polyester resin, which at a temperature of 22°C has a viscosity of 1300 +/- 100 mPas, to 7.5 g of silicon dioxide powder and carrying out dispersion by means of a dissolver at 3000 $min^{-1}$, adding a further 90 g of the unsaturated polyester resin to 60 g of this dispersion, and repeating the dispersing operation, and
- a micropore volume of 0.03 to 0.07 cm$^3$/g.

2. Pyrogenically prepared silicon dioxide powder according to Claim 1, **characterized in that** the STSA surface area is 30 to 300 m$^2$/g.

3. Pyrogenically prepared silicon dioxide powder according to Claim 1 or 2, **characterized in that** the thickening action, based on the STSA surface area, is from 5 to 7 mPas·g/m$^2$.

4. Pyrogenically prepared silicon dioxide powder according to any of Claims 1 to 3, **characterized in that** the micropore volume is 0.035 to 0.065 cm$^3$/g

5. Pyrogenically prepared silicon dioxide powder according to any of Claims 1 to 4, **characterized in that** the fractal dimension $D_m$ is greater than 2.61 to 2.85.

6. Pyrogenically prepared silicon dioxide powder according to any of Claims 1 to 5, **characterized in that** the average primary particle diameter is >10 to <40 nm.

7. Pyrogenically prepared silicon dioxide powder according to any of Claims 1 to 6, **characterized in that** the DBP absorption is less than or equal to 300 g/100 g dibutyl phthalate.

8. Process for preparing the pyrogenic silicon dioxide powder according to any of Claims 1 to 7, **characterized in that**

   - one or more hydrolysable silicon compounds,
   - an oxygen-containing gas and
   - a primary combustion gas are mixed,
   - the mixture is ignited in a burner and burnt via a pipe into a reaction chamber,
   - additionally a secondary combustion gas is passed into the reaction chamber and
   - subsequently the powder formed is separated from gaseous substances, where
   - the hydrogen ratio gamma$_{primary}$ of the raw-material mixture is less than 1 and at the same time the oxygen ratio lambda$_{primary}$ of the raw material mixture is greater than 1, and where
   - gamma$_{primary}$ is defined as the combustion gas fed to the mixing chamber divided by the combustion gas required stoichiometrically and
   - lambda$_{primary}$ is defined as the oxygen supplied to the mixing chamber divided by the oxygen required stoichiometrically.

9. Process according to Claim 8, **characterized in that** gamma$_{primary}$ is 0.4 to 0.9.

10. Process according to either of Claims 8 or 9, **characterized in that** gamma$_{total}$ is 1.05 to 4.

11. Process according to any of Claims 8 to 10, **characterized in that** lambda$_{primary}$ is >1 to 10.

12. Process according to any of Claims 8 to 11, **characterized in that** lambda$_{total}$ is >1 to 10.

13. Process according to any of Claims 8 to 12, **characterized in that** the hydrolysable silicon compound is introduced in vapour form.

14. Process according to any of Claims 8 to 13, **characterized in that** silicon halides, silicon organohalides and/or silicon alkoxides are used as silicon compound.

15. Process according to any of Claims 8 to 14, **characterized in that** hydrogen, methane, ethane, propane, butane, natural gas and/or carbon monoxide is used as combustion gas.

16. Process according to any of Claims 8 to 15, **characterized in that** air or oxygen-enriched air is used as oxygen-containing gas.

17. Dispersion containing the pyrogenically prepared silicon dioxide powder according to any of Claims 1 to 7.

**18.** Dispersion according to Claim 17, **characterized in that** the silicon dioxide fraction is 0.1% to 50% by weight.

**19.** Dispersion according to Claim 17 or 18, **characterized in that** the pH of the dispersion is 2 to 11.5.

**20.** Dispersion according to any of Claims 17 to 19, **characterized in that** the average diameter of the silicon dioxide particles in the dispersion is less than 500 nm.

**21.** Use of the pyrogenic silicon dioxide powder according to any of Claims 1 to 7 for producing polyester films, for producing catalyst supports, as a constituent of paints and inks, and for polishing metallic and oxidic surfaces.

**22.** Use of the dispersion according to any of Claims 17 to 20 for producing polyester films, for producing catalyst supports, as a constituent of paints and inks, and for polishing metallic and oxidic surfaces.

**Revendications**

**1.** Poudre de dioxyde de silicium produite par pyrogénation sous forme de particules primaires agrégées ayant

- une surface STSA de 10 à 500 $m^2/g$,
la surface STSA étant déterminée selon le procédé-t conformément à DIN 66135-2, ASTM D 5816 avec utilisation de la relation d'épaisseur de couche

$$t = (26,6818/(0,0124806-log(p/p_0)))^{0,4}$$

où p = pression de gaz et $p_0$ = tension de vapeur à saturation du corps adsorbé à la température de la mesure, les deux étant exprimées en l'unité Pa
- un effet épaississant, par rapport à la surface STSA, de 4 à 8 mPa.s.g/$m^2$,
en désignant par effet épaississant la valeur de la viscosité en mPa.s d'une dispersion à 25°C, mesurée à l'aide d'un viscosimètre rotatif à une vitesse de cisaillement de 2,7 $s^{-1}$, la dispersion étant obtenue par introduction, à une température de 22°C, pour 7,5 g de poudre de dioxyde de silicium, de 142,5 g d'une résine polyester insaturée qui à une température de 22°C présente une viscosité de 1 300 $\pm$ 100 mPa.s, et dispersion au moyen d'un dissolveur à 3 000 min $^{1}$, addition d'encore 90 g de la résine polyester insaturée à 60 g de cette dispersion et répétition de l'opération de dispersion et
- un volume de micropores de 0,03 à 0,07 $cm^3/g$.

**2.** Poudre de dioxyde de silicium produite par pyrogénation selon la revendication 1, **caractérisée en ce que** la surface STSA est de 30 à 300 $m^2/g$.

**3.** Poudre de dioxyde de silicium produite par pyrogénation selon la revendication 1 ou 2, **caractérisée en ce que** l'effet épaississant est de 5 à 7 mPa.s.g/$m^2$ par rapport à la surface STSA.

**4.** Poudre de dioxyde de silicium produite par pyrogénation selon les revendications 1 à 3, **caractérisée en ce que** le volume de micropores est de 0,035 à 0,065 $cm^3/g$.

**5.** Poudre de dioxyde de silicium produite par pyrogénation selon les revendications 1 à 4, **caractérisée en ce que** la dimension fractale $D_m$ est de plus de 2,61 à 2,85.

**6.** Poudre de dioxyde de silicium produite par pyrogénation selon les revendications 1 à 5, **caractérisée en ce que** le diamètre moyen de particule primaire est >10 à <40 nm.

**7.** Poudre de dioxyde de silicium produite par pyrogénation selon les revendications 1 à 6, **caractérisée en ce que** l'absorption de DBP est inférieure ou égale à 300 g/100 g de phtalate de dibutyle.

**8.** Procédé pour la production de poudre de dioxyde de silicium pyrogénée selon les revendications 1 à 7, **caractérisée en ce qu'**on mélange

- un ou plusieurs composés siliciés hydrolysables,
- un gaz contenant de l'oxygène et
- un gaz combustible primaire,
- on allume dans un brûleur le mélange et on le fait brûler en l'introduisant par un tube dans une chambre de réaction,
- on introduit en outre un gaz combustible secondaire dans la chambre de réaction et
- ensuite on sépare la poudre résultante d'avec les substances gazeuses,
- le taux d'hydrogène gamma$_{primaire}$ du mélange de matières premières étant inférieur à 1 et en même temps le taux d'oxygène lambda$_{primaire}$ du mélange de matières premières étant supérieur à 1, et
- gamma$_{primaire}$ étant défini comme le gaz combustible introduit dans la chambre de mélange, divisé par le gaz combustible stoechiométriquement requis et
- lambda$_{primaire}$ étant défini comme l'oxygène introduit dans la chambre de mélange, divisé par l'oxygène stoechiométriquement requis.

**9.** Procédé selon la revendication 8, **caractérisé en ce que** gamma$_{primaire}$ vaut de 0,4 à 0, 9.

**10.** Procédé selon la revendication 8 ou 9, **caractérisé en ce que** gamma$_{total}$ vaut de 1,05 à 4.

**11.** Procédé selon les revendications 8 à 10, **caractérisé en ce que** lambda$_{primaire}$ vaut de >1 à 10.

**12.** Procédé selon les revendications 8 à 11, **caractérisé en ce que** lambda$_{total}$ vaut de >1 à 10.

**13.** Procédé selon les revendications 8 à 12, **caractérisé en ce que** le composé silicié hydrolysable est introduit sous forme de vapeur.

**14.** Procédé selon les revendications 8 à 13, **caractérisé en ce qu'**on utilise comme composé silicié des halogénures de silicium, des organohalogénures de silicium et/ou des alcoolates de silicium.

**15.** Procédé selon les revendications 8 à 14, **caractérisé en ce qu'**on utilise comme gaz combustible l'hydrogène, le méthane, l'éthane, le propane, le butane, du gaz naturel et/ou le monoxyde de carbone.

**16.** Procédé selon les revendications 8 à 15, **caractérisé en ce qu'**on utilise comme gaz contenant de l'oxygène l'air ou de l'air enrichi avec de l'oxygène.

**17.** Dispersion contenant la poudre de dioxyde silicium produite par pyrogénation selon les revendications 1 à 7.

**18.** Dispersion selon la revendication 17, **caractérisée en ce que** la teneur en dioxyde de silicium vaut de 0,1 à 50 % en poids.

**19.** Dispersion selon la revendication 17 ou 18, **caractérisée en ce que** le pH de la dispersion vaut de 2 à 11,5.

**20.** Dispersion selon les revendications 17 à 19, **caractérisée en ce que** le diamètre moyen de particule des particules de dioxyde de silicium dans la dispersion est inférieur à 500 nm.

**21.** Utilisation de la poudre de dioxyde de silicium pyrogénée selon les revendications 1 à 7, pour la production de films de polyester, de supports de catalyseurs, comme composant de laques et de peintures et pour le polissage de surfaces métalliques et d'oxydes.

**22.** Utilisation de la dispersion selon les revendications 17 à 20, pour la production de films de polyester, de supports de catalyseurs, comme composant de laques et de peintures et pour le polissage de surfaces métalliques et d'oxydes.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10145162 A
- DE 102004063762 A
- DE 102005007753 A
- DE 19756840 A

**In der Beschreibung aufgeführte Nicht-Patentliteratur**

- *Proc. R. Soc. London,* 1989, vol. 423, 169
- *Proc. R. Soc. London,* 1989, vol. A 423, 169